# EUROPEAN PATENT SPECIFICATION

(11) **EP 1 439 496 B1**
(45) Date of publication and mention of the grant of the patent: **16.12.2009**
(21) Application number: 03029883.0
(22) Date of filing: 29.12.2003
(51) Int. Cl.: G07B 17/00

(54) **System for tracking mailpieces**
System zum Verfolgen von Poststücken
Système pour le suivi des plis postaux

(30) Priority: 24.12.2002 US 436350 P
(43) Date of publication of application: 21.07.2004
(73) Proprietor: PITNEY BOWES INC., Stamford, CT 06926-0700 (US)
(72) Inventor: Baker, Christopher, A., Lafayette, IN 47906 (US); Starrett, Cortland, D., Brookston, IN 47923 (US); Quine, Dougles B., Bethel, Connecticut 06801 (US)
(74) Representative: HOFFMANN EITLE

(56) References cited:
- WO-A-01/56712
- WO-A-02/15034
- US-A- 5 072 400
- US-B1- 6 266 575

## Description

This application claims priority from US provisional application no. 60/436,350 filed on December 24, 2002.

### I. FIELD OF THE INVENTION

The present invention relates to tracking mail pieces as they progresses through a postal distribution system, and more particularly, to a system for retrieving delivery and status information on a specified mail piece.

### II. BACKGROUND OF THE INVENTION

The production of mail requires a number of steps that must be coordinated in order for all the elements to come together and to meet the postal service pickup deadlines and the mailer's distribution schedules. The ability to track the production floor operations is essential to ensure that service level agreements are met. This in turn drives a need to provide a way for a customer owning high-speed mailing equipment to transfer customer data from their equipment based on real-time measurements and data collection. The data collected needs to be transferred over a localized network or over the internet to a data processing system.

In the past, the data collection mechanisms were independent elements and storage mechanisms, which often implemented incompatible and disconnected data sources that could not be brought together to provide an overall view of the mail processing processes. Typically, data was provided using dedicated programs and work stations requiring constant presence by the user on the work floor.

It was often typical, that customers had multiple mailing sites but had no means to aggregate the mail piece data from each of those sites. Additionally, some customers maintained mixed vendor shops each having a mailing system using mailing data that was incompatible relative to one another. Thus, the mailing data present at each of the aforementioned sites could not be aggregated between one another to enable a unified view of all the customers mailing operations.

Further, it has proven desirable that a user (mail sender or recipient) may often find it necessary to review the details on a particular mail piece that has passed through a mailing system (e.g., the USPS). One such objective to do so would be to track and trace a mail piece using minimal information.

Tracking and tracing mail pieces typically requires a unique identifier for each mail piece in order for it to recognized., However, the majority of mail pieces do not have such a unique identifier thus obviating tracking and tracing of such mail pieces. The United States Postal Service (USPS) did offer options (registered/certified mail) to provide individual mail tracking. However, these options were costly and only provided tracking at the beginning and end of the postal distribution cycle.

One prior art attempt to overcome the above deficiencies in tracking individual mail pieces was to assign a unique code to each mail piece (e.g., on mail pieces envelope). This approach is currently is use by various private carriers (e.g., FedEx, UPS, etc.). However, this approach is deficient in that the unique code is not shared amongst various postal couriers and requires significant investment by each private carrier to utilize it's own unique codes (e.g., requires infrastructures of scanners dedicated for it's unique code.

WO-A-01/56712 discloses an apparatus for automatically acquiring and verifying, relative to pre-established rules, address information and postage value indicia on a face of each of a plurality of mail pieces. The mail pieces can be subsequently placed in a tray and a label is applied to the tray, the label imprinted with information which relates to the mail piece content of the tray. The apparatus includes an inserter to produce a finished mail piece or a sorter which conveys finished mail pieces, with the address information and postage value indicia visible. An in-line module is disposed adjacent the inserter, the module including a path along which each finished mail piece is transported. The module includes a scale and an image capture device. A scanning device can be provided to acquire a representation of the information on the tray label. An image processing device is provided in communication with the control processor device, and is adapted to synchronize acquisition, storage and verification of the address information, postage value indicia and label information.

### III. SUMMARY OF THE INVENTION

According to the present invention, there is provided a system for acquiring and storing mail piece processing and tracking details as set out in Claim 1.

Optional features are set out in the other claims.

An embodiment of the present invention overcomes the aforesaid deficiencies by providing data tags that allow- mail pieces to be recognized as they pass through: an insertion system, a sortation system, a postal sortation system and a postal distribution system. This allows both mailers and the recipients (e.g., customers) to determine the current status of the mail piece as well as the contents of the mail piece and the predicted (or actual) delivery time for the mail piece. On a mail piece's return path to a mailer (e.g., a payment for a invoice) the embodiment enables mailers to determine the number of incoming orders or bill payments in transit such that the mailers can estimate the resources that will be needed to process the orders as well as providing the mailers with an estimate as to incoming money.

A preferred embodiment obtains or creates a unique (virtual) identifier for each mail piece that allows mailing statistics to be generated and permits information presentment using internet browser technology, which can be accessed from any computer using a standard browser worldwide. The embodiment further provides a low cost and currently supported method to apply a unique identifier to a mail piece, which can be obtained by a user of the tracking system without requiring the user to have any previous knowledge of the unique identifier. For instance, the thickness of a mail piece, an image of a mail piece, a postal meter sequence number, postal amount and the postal meter ID number can all be parameters used to distinguish multiple mail pieces from one another that may be in the same batch of mail being mailed to the same destination address.

An example of such a situation is that many people have multiple accounts with a mutual fund (e.g., UTMA, IRA, Roth IRA, 40 l(k)) in the names of the husband, spouse and children residing at the same address with the same mutual fund. Many envelopes will arrive at that residence with the same POSTNET barcode (the destination address). And if a PLANET code is applied to that mail piece which is unique to a particular mailer, there may be still numerous envelopes that contain the same POSTNET code and PLANET code combination that will falsely report as the same as they pass through the postal system using the PLANET code tracking system of the USPS. Hence an embodiment uses information additional to the POSTNET code and PLANET code information available on a mail piece so as to distinguish each mail piece separately and track each mail piece separately and accurately.

In a preferred embodiment, the tracking and tracing system preferably uses at least two levels of information to gain an understanding as the tracking of each mail piece, or a series of mail pieces. When additional information is needed to distinguish similar mail pieces from one another, the system can retrieve the actual image of the face of the mail piece (e.g., the outside front image of the mail pieces envelope) so that it can be reviewed and used to distinguish itself from other mail pieces often present in a same batch of mail.

### IV. BRIEF DESCRIPTION OF THE DRAWINGS

Embodiments will be described in the following detailed description, in conjunction with the accompanying drawings, in which like reference numerals refer to like parts throughout, and in which:
Fig. 1 is a system level diagram depicting some of the components of the track and trace system in an embodiment;
Fig. 2 is a flow chart depicting the processing of a mailpiece;
Fig. 3 depicts a lookup table assembled by the track and trace system;
Fig. 4 is a flowchart depicting the usage of the track and trace system by a user; and
Figs. 5-8 depict computer screen displays of the track and trace system.

### V. DETAILED DESCRIPTION OF THE PREFERRED EMBODIMENT

As will be described below, an embodiment provides a mail piece tracking and tracing system that is designed to track mail pieces as the progress through various routing and sorting facilities from source to destination in conjunction with individual mail piece information compiled during typical mail piece processing. More specifically the embodiment collects mail piece images from mail automation equipment such as inserter systems, and MLOCR sorting machines. Barcodes applied to mail pieces can be read by mail automation equipment and decoded information is conveyed to a data repository for subsequent retrieval enabling mail piece tracking.

As previously mentioned, the USPS currently provides mail tracking information on specially bar-coded mail pieces, commonly known as a PLANET code, which is used by the USPS to report the mail piece locations as they progress through the various mail handling facilities of the postal distribution system. Each time the mail automation equipment of the USPS is presented with a mail piece, an entry is made by the USPS into its PLANET code data base. Once this data is collected, it is processed and presented to the tracking system of the present embodiment, preferably via the internet. Thus, a user of the tracking and tracing system preferably visits a web site that preferably presents the user with a search page enabling search queries into the tracking system. That is, a user can enter information known about a mail piece (e.g., recipient name, time the mail was sent, PLANET code number, etc.), and after entering the information, thumbnail images of mail pieces that match the criteria are then presented to the user. The user is then enabled to select one of the thumbnail images to show all of the tracking events associated with that mail piece.

It is also to be understood that the tracking and tracing system has applications regarding incoming mail, such that when PLANET codes are printed on return inserts, information can be gathered regarding this mail piece as it progresses through a postal system to a mailer. Therefore, from the integrity of the time and date the outbound letter was printed, inserted, sorted and dropped off at a post office, through various USPS facilities to a customers local mail sorting facility, delivery statistics are gathered by the tracking and tracing system.

In essence, and as will be apparent from the below description, information about a mailing or individual mail pieces is gathered to create a meta-description of the mail piece beyond the current technology associated with the USPS's POSTNET and PLANET barcodes. For example, the thickness of a mail piece, an image of a mail piece, a postal meter sequence number, postal amount and the postal meter ID number can all be parameters used to distinguish multiple mail pieces from one another that may be in the same batch of mail being mailed to the same destination address.

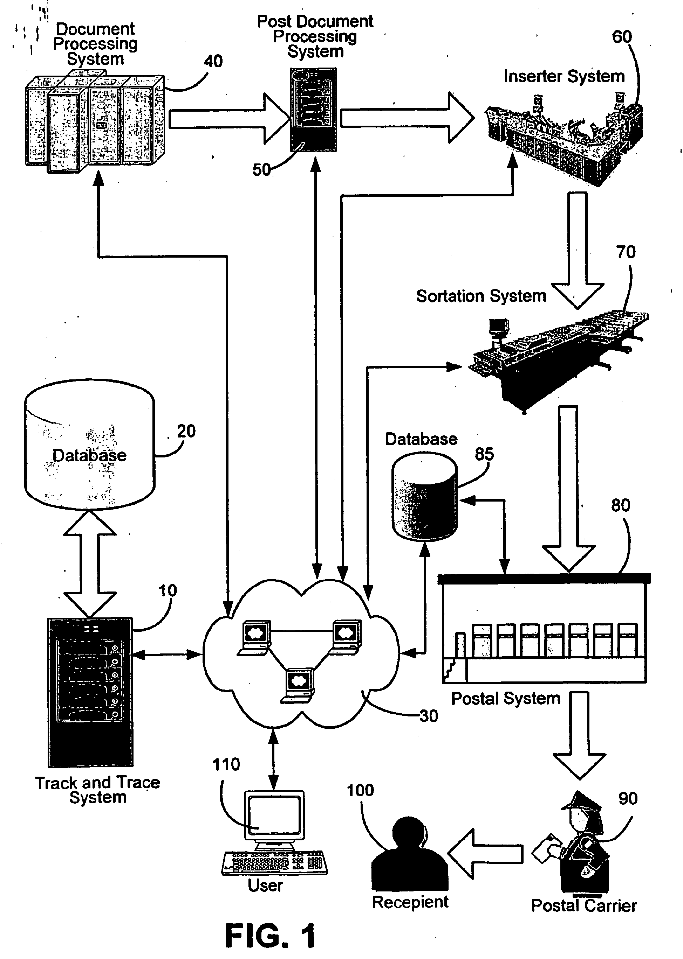

Turning now to Fig. 1, there is shown the principle components of the preferred embodiment of the subject invention, and of course it is to be appreciated that the preferred embodiment of the present invention may be modified as required for a specific implementation or that alternative embodiments may of course exist. Designated by reference numeral 10 is the track and trace system that is utilized to enable tracking of individual mailpieces, as will be described in more detail below. It is to be appreciated that the track and trace system 10 includes the necessary computer hardware and software for enabling mailpiece tracking based upon previously stored data relating to that mailpiece, as again will be described in further detail below.

Since the present embodiment concerns the overall system components and use of stored data, a detailed description of the specific components of the track and trace system, and their modes of communication is not necessary for one skilled in the art to gain a proper understanding of the embodiment. For example, shown coupled to the track and trace system 10 is a database 20 for storing the aforesaid stored mailing data, which database may of course be in many differing configurations.

Track and trace system 10 is coupled and configured to be interoperable with the internet 30 using known methods of internet protocol communication. Thus for all described components herein of the embodiment, their specific communication protocols for communicating with one another, whether it be via the internet or otherwise, and specifically to the track and trace system 10, will not be described in any further detail.

Designated by reference numeral 40 is a document processing system that is used to create the electronic mail contents or documents to be contained in a finished mailpiece. For example, the document processing system 40 may be used by a utility company for generating the electronic files corresponding to the billing statements for each of its customers. Typically, the document processing system generates an electronic mail run file containing the billing statements for a plurality of its customers, with the document processing system 40 being in the configuration of a mainframe computer. Thus, this electronic mail run file at a minimum contains the names of the mailpiece recipients in addition to the mailpiece recipient's address and contents of the mailpiece (e.g., billing statements). The POSTNET and/or PLANET code barcode may also be contained in the electronic mail run file.

The document processing system 40 may be coupled to the track and trace system 10, preferably via the internet 30, and programmed to download a copy of the aforesaid mail run file for storage in the database 20 coupled to the track and trace system 10. After the mail run file is received by the track and trace system 10, it may preferably then create individual files for each mailpiece recipient of the mail run file in database 20. Preferably, each file may contain the recipients: name; addressing information; phone number; document contents; POSTNET and/or POSTNET barcode information. Again, it is to be appreciated that this mail run file may or may not be copied to the track and trace system 10, and if yes, only selected portions of it may be retained in the database 20 for enabling future mailpiece tracking according to the present embodiment.

A document post processing system 50 may be coupled to the document processing system 40 for receiving and merging new data with the aforesaid electronic mail run file to create the meta-data available through the present embodiment. Typically, post processing systems 50 are implemented for modifying the electronic mail run data file, an example of which is known as StreamWeaver^{™}, which is commercially available from Pitney Bowes Inc. and described in U.S. Patent No.6,658,430. The data added to the mail run data file possibly include adding POSTNET and PLANET code barcodes, information about selective advertising materials added to the mailing, the mailing batch numbers, submission times to the postal service, changes to the mail run data file such as new corporate logos, new terms and conditions, new offers, new company names that have been replaced in the print file due to corporate changes or regulatory changes since the legacy system was programmed to created the original fixed billing information.

The document post processing system 50 may be coupled to the track and trace system 40, preferably via the internet 30, and like the aforesaid document processing system 40, may be programmed to download a copy of the modified mail run file for storage in the database 20 coupled to the track and trace system 10. In the event the mail run file was previously copied to the track and trace system 10, the information newly added to the mail run file by the post processing system 50 may be respectively supplemented to each already created file for each individual mailpiece contained in the mail run file. It is to be appreciated that any information from the mail run file may or may not be copied to the track and trace system 10 from the post processing system 50, and if yes, only selected portions of it may be retained in the database 20 for enabling future mailpiece tracking according to the present embodiment.

Typically after processing of the mail run file is performed by the post processing system 50, the mail run file is presented to a high-speed printer (not shown) for printing all the documents contained in the mail run file. After the documents are printed, they are presented to an inserter system, shown generally by reference numeral 60, that physically creates all the individual mailpieces contained in the mail run file as printed by the aforesaid printer. An example of such inserter systems can be found in U.S. Patent Nos. 6,364,305, 5,797,015 and 5,419,440. Typically, such an inserter system 60 includes an input system that feeds printed documents contained in the mail run file typically from a paper web to an accumulating station that accumulates the sheets of paper in collation packets. Typically a single sheet of a collation is coded (the control document), which coded information enables the control system of the inserter system to control the processing of documents in the various stations of the mass mailing inserter system. The code can comprise a bar code, UPC code or the like. After sheets are accumulated into collations the collations are folded in a folding station and the folded collations are then conveyed to one or more insert feeder stations. The insert feeder station(s) is operational to convey an insert (e.g., an advertisement) to be nested with the aforesaid sheet collation being conveyed along the main deck. The sheet collation, along with the nested insert(s) are next conveyed into an envelope insertion station that is operative to insert the collation into an envelope The envelope is then preferably conveyed to postage station that applies appropriate postage thereto.

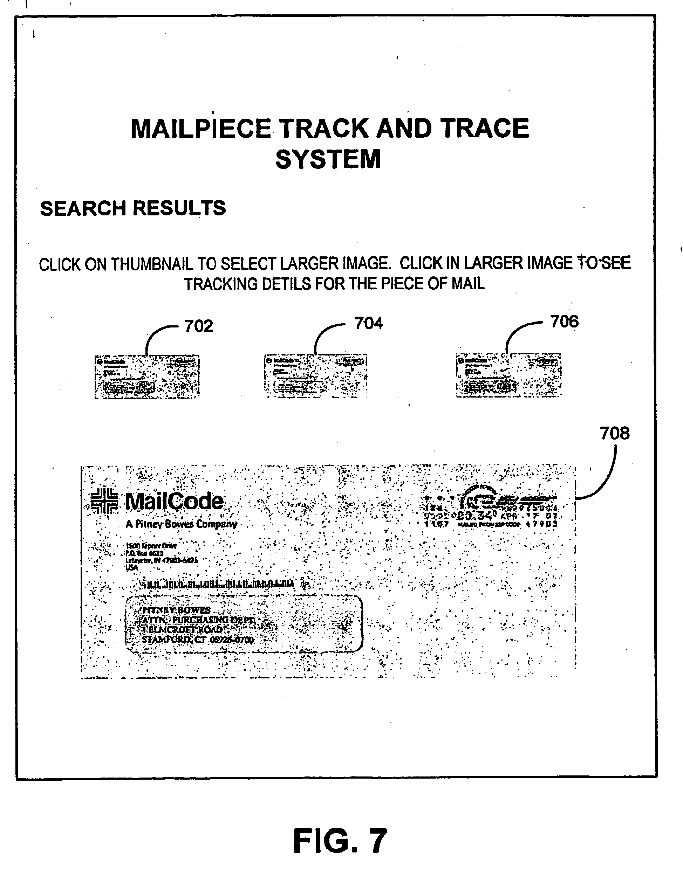

As previously mentioned, inserter system 60 includes a control system coupled to each aforesaid modular component of an inserter system , which control system controls and harmonizes operation of the various modular components implemented in inserter system 60. Preferably, the control system uses an Optical Character Reader (OCR) for reading the code from each coded document. To enable this harmonized operation, the control system is typically provided with the mail run file from either document processing system 40 or post processing system 50. Typically, as contained in an inserter system 60, this mail run file is referred to as a Mail Run Data File (MRDF), which in addition to the aforesaid mail run file contains information relevant to each mailpiece acquired during the creation of the mailpiece by an inserter system 60. This acquired information can include what inserts were added to a mailpiece, the size of the mailpiece (e.g., weight, thickness, etc.), the postage amount, and the serial number of the postage meter that applied postage to the mailpiece. Further, if the inserter system includes a camera, the original MRDF data may also be supplemented with a visual image of the finished mailpiece (e.g., the outside face of the envelope 702, see Fig. 7).

Like the aforesaid document post processing system 50, the inserter system 60 may be coupled to the track and trace system 10, preferably via the internet 30, and programmed to download a copy of the MRDF for storage in the database 20 coupled to the track and trace system 10. In the event a mail run file was previously copied to the track and trace system 10, the information newly added to the mail run in the MRDF may be respectively added to each already created file for each individual mailpiece contained in the mail run file. It is to be appreciated that any information from the mail run file may or may not be copied to the track and trace system 10 from an inserter system 60, and if yes, only selected portions of it may be retained in the database 20 for enabling future mailpiece tracking according to the present embodiment.

After individual mailpieces are formed by an inserter system 60, the mailpieces are then typically conveyed to a sortation system, shown generally by reference numeral 70. Sortation systems 70 are well known in the art as evidenced by U.S. Patent No. 6,539,098. The function of the sortation station 70 is typically to sort the mailpieces belonging to a batch of mail into sortation groups (based upon the POSTNET of each mailpiece) according to Untied States Postal System (USPS) standards for enabling discounted postage on each mailpiece. The sortation system 70 typically scans each mailpiece to determine and cleanse a recipients address so as to apply the correct POSTNET to the mailpiece. The POSTNET is an eleven digit barcode character string wherein the first five digits is the typically five digit zip code (recipient post office), the next four digits corresponds to a recipients block face (side of a city block) and the last two digits correspond to the recipient's street address.

When a mailer subscribes to the PLANET code service offering of the United States Postal System, a sortation system 70 also typically applies the PLANET code barcode to each mailpiece. The destination CONFIRM service code is a 12 or 14 digit barcode where the first two digits represents the PLANET barcode is being used for origin CONFIRM service with the next 9 or 11 digits identify the mailer and the mailpiece. The last digit is a checksum to ensure data integrity. Specifically, of these 9 or 11 digits, the first five digits is a unique (and fixed) 5-digit ID assigned by the United States Postal Service to identify mailers subscribed to the PLANET code service offering. The next four (4) or six (6) digit field is the mailing (or customer) ID that is defined and assignable by the mailer to identify a mailpiece to that mailer. Currently only a four (4) digit assignable field is used for the mailing (or customer) ID. sortation system 70 includes the necessary hardware for scanning each mailpiece and storing the scanned image of each mailpiece (e.g., see Fig. 7). The sortation system 70 electronically stores the image of each mailpiece along with it's applied POSTNET and PLANET barcode.

The sortation system 70 is also coupled to the track and trace system 10, via the internet 30 and programmed to download the aforesaid electronic file to the track and trace system 10. In the event a mail run file was previously copied to the track and trace system 10 that corresponds to the mailpieces sorted by sortation system 70, this information compiled in sortation system 70 is respectively added to each already created electronic file for each individual mailpiece sorted by sortation system 70. And in the event a mail run file was not previously downloaded to the track and trace system 10, the aforesaid electronic file received from sortation system 70 will then form the track and trace database 20 for mailpieces as further mentioned below for tracking individual mailpieces.

As is known in mailpiece processing, after a batch of mail has been sorted (via sortation system 70) for postal discounts, it is then delivered to a postal distribution system 80 (e.g., the United States Postal System) for enabling delivery of individual mailpieces to recipients 100, via a mail carrier 90. As is also well known, the United States Postal System 80 provides barcode readers that read POSTNET and PLANET codes from mailpieces at various locations in the mail stream. For example, these readers are located at postal service mail sorting sites These readers are typically in communication with the United States Postal Service CONFIRM server (e.g. database 85), which typically logs into the confirm server database the date, time and location when a particular mailpiece passes through the multiple postal service mail delivery stream scan point locations and the time the mailpiece was delivered to the carrier 90 for delivery to a recipient 100.

The aforesaid postal database 85 is coupled to the track and trace system 10, preferably via the internet 30, to provide the information collected on each mailpiece having a predetermined PLANET code to the track and trace system 10. This tracking information is then added to a file already created for a mailpiece having the predetermined PLANET and/or POSTNET code.

With the components of the present embodiment being described above, its method of use will now be described.

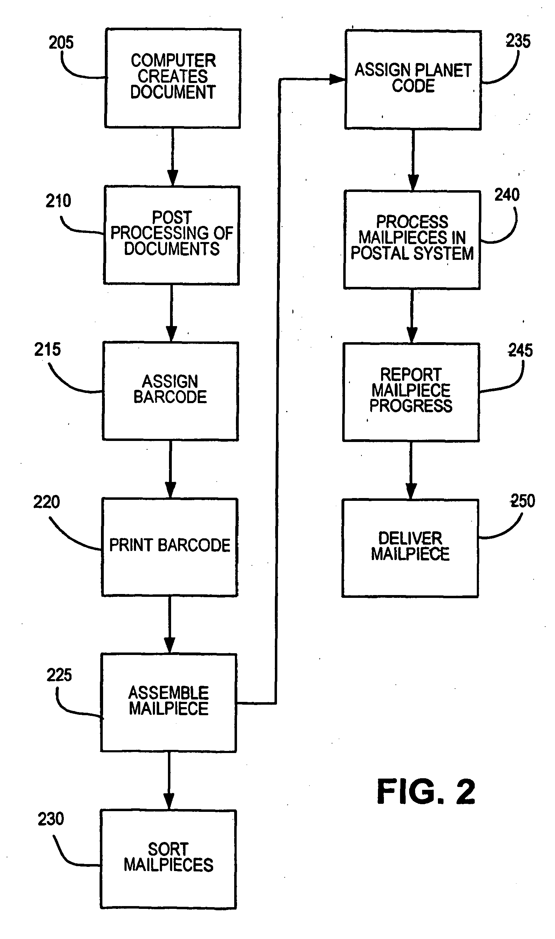

Referring now to Fig 2, and with continuing reference to Fig. 1, the tracking system, as described above, has processes that span a mail pieces lifecycle (e.g., from the initial creation of the mailpiece, to the final delivery of the mailpiece, and even to the return mailing associated with the mailpiece. Starting at step 205, a bill is initially created on a document processing system, which may have an internal identifier by which it is known to the bill creation process. As mentioned above, the mail run file used by the document processing system 40 may be forwarded to the track and trace system 10 for retrieval therein.

Typically, the bill creation systems are legacy systems which do not support introduction of new capabilities and therefore often a aforesaid post processing system 50 is utilized (step 210). As mentioned above, such a post processing system 50 introduces additional elements onto documents to be created. For instance, such additional elements may include an internal integrity checking barcode (step 215) or USPS PLANET barcodes as well as supporting additions to the mail run data file (MRDF), which is commonly the internal computer file that represents the individual mail pieces in a batch mailing file. As mentioned above, the mail run data file used by the post document processing system 50 may be forwarded to the track and trace system 10 for retrieval therein.

Next, a document is then printed (step 220) and conveyed to an inserter system 60 (step 225) so to be assembled into a mail piece (e.g., inserted into an envelope). Postage may be applied by a mailing machine coupled to the inserter system 60, in which event the MRDF of the inserter system 60 would identify the postage amount required for each mailpiece assembled. Again, as mentioned above, the mail run data file used by the inserter system 50 may be forwarded to the track and trace system 10 for retrieval therein.

The assembled mailpieces are then delivered to a mail piece sortation system 70 that typically sorts sequences the mailpieces in proper order to permit the USPS to offer discounted postage rates to the sorted mail pieces (step 230). Typically, the sortation system applies a POSTNET barcode to each mailpiece to qualify for the aforesaid postal discount rates.

It is to be appreciated that sortation system 70 may also preferably operate as a data acquisition device which acquires at least some of the following types of data regarding each mail piece processed: mail piece size and shape, the PLANET code, the POSTNET code, mail piece image, recipients name, processing time of day, the service urgency, the postage amount, the qualification (USPS category), and the tray or postal package that the mail piece is being shipped within. The aforesaid acquired data can then be integrated into the associated MRDF for the mail pieces.

The sortation system 70 may also preferably be utilized to print a PLANET code barcode on each outgoing mailpiece, which PLANET code would be added to the MRDF to ensure that a complete set of information regarding each mail piece is available (step 235). Preferably after all the mailpieces are processed by the sortation system 70, the MRDF, as modified by sortation system 70, is forwarded to the track and trace system 10 for retrieval therein.

Once the mail is sorted and documented in accord with USPS manifesting requirements for submission, the mailpieces are then deposited with the USPS 85 for postal distribution (step 240). The individual PLANET code on the mailpieces or an ASN (Advanced Shipping Notice barcode on the package of mail destined to the same post office) allows USPS scanners to report progress of the mailing as it progresses through the USPS and record it in postal database 85 (step 245).

After the sortation process is completed in the postal system 80, the mailpieces are then delivered to recipients 100, via postal carriers 90 (step 250). Thus, in accordance with the track and trace system, all data is gathered involving the processing of mailpieces from time of creation through the sortation process of those mailpieces in the postal system 80 that use the PLANET code service offering of the USPS.

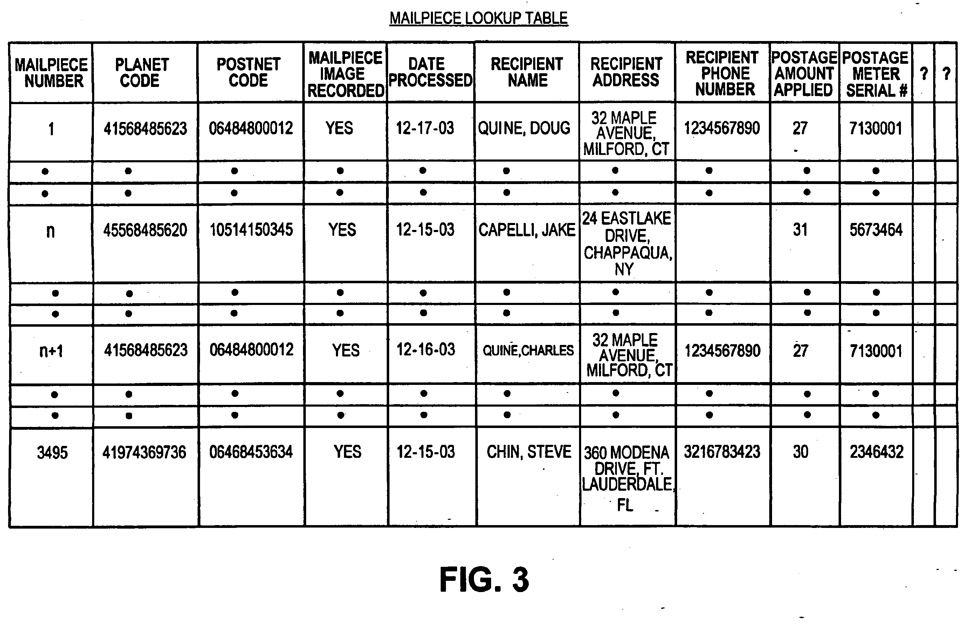

As shown Fig. 3, the database 20 of the track and trace system 10 may have a lookup table 300 that is categorized and populated with date recorded from one or more of the above described components and systems shown in Fig 1. Preferably, the database 20 of the track and trace system is configured to compile a plurality of lookup tables 300, with each corresponding to one or more client ID numbers, which ID number is preferably the 5-digit number as implemented in the PLANET code (e.g., 64845). For instance, if a user 110 (e.g. mail recipient or mail sender) of the track and trace system 10 wanted to form a search using three different 5-digit client ID PLANET code numbers then track and trace system 10 would form a lookup table compiling all mailpiece data populated in database 20 that corresponds to the selected three different 5-digit client ID PLANET code numbers.

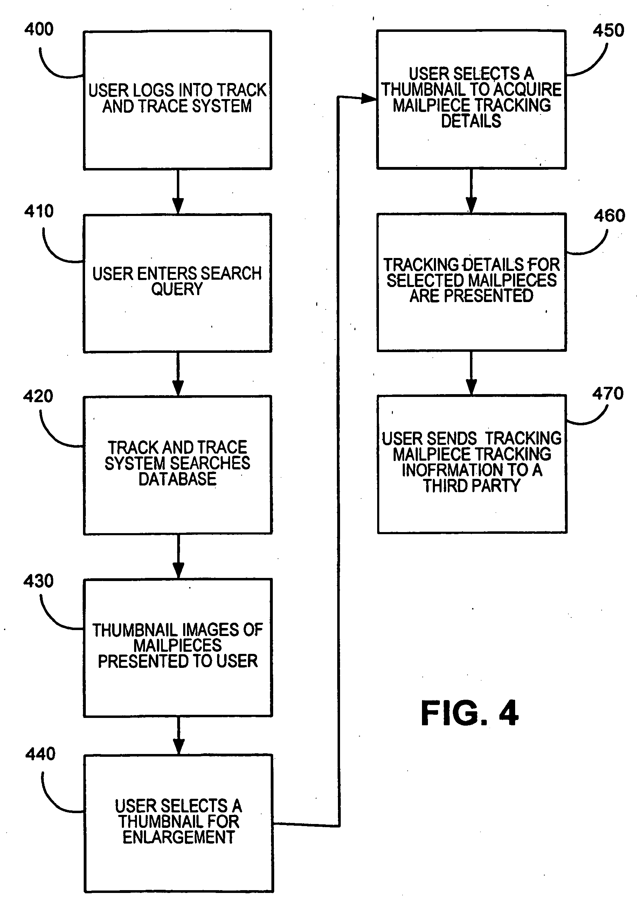

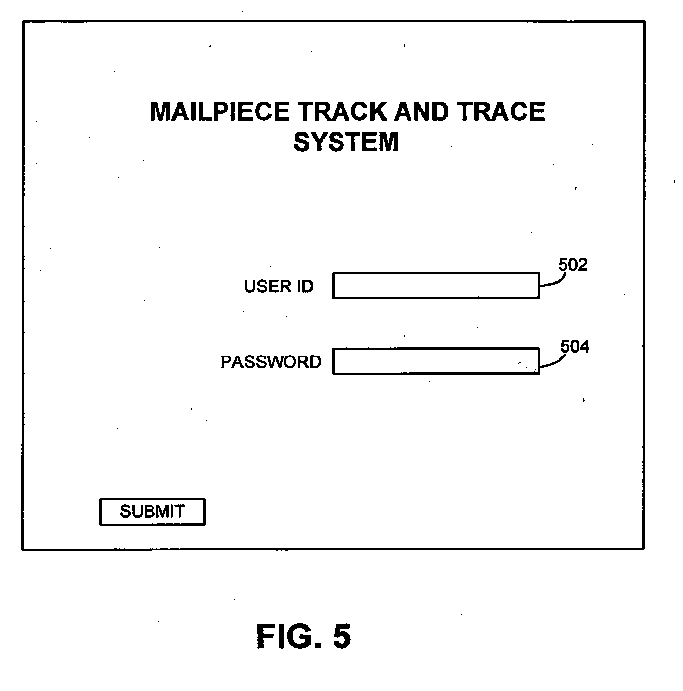

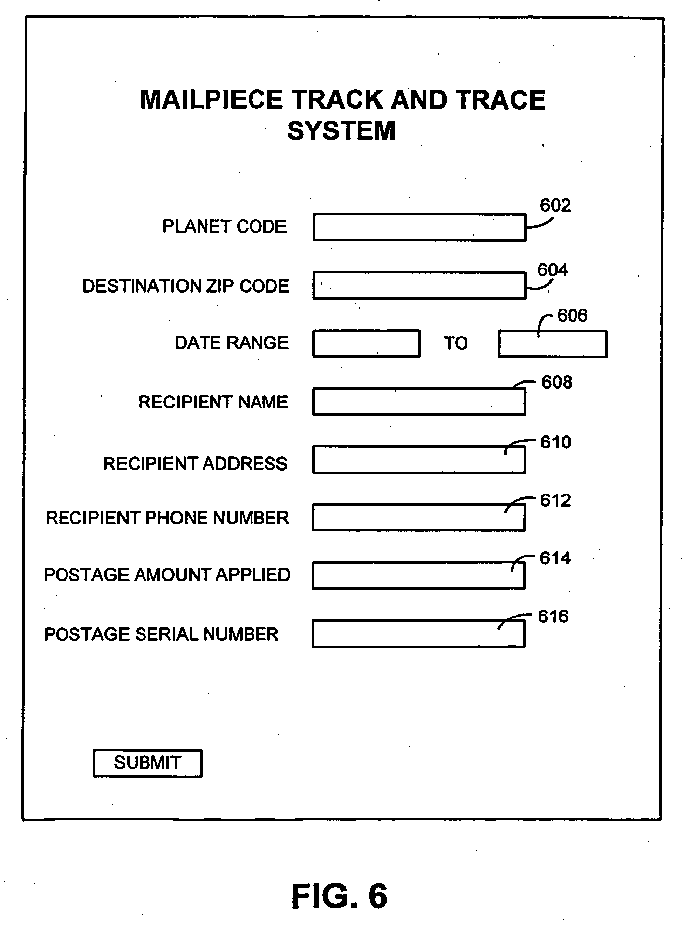

With reference to Figs. 4-8, use of the track and trace system 10 by a user 110 will now be discussed. With the user 110 preferably using a PC terminal coupled to the track and trace system 10 via the internet 30, the user 110 logs into the track and trace system (step 400) by preferably entering the user's ID and password (Fig. 5). Once authentication of the user 110 is complete, the user 110 enters a search query (step 410) corresponding to a particular mailpiece of which the user desires to view it's delivery tracking details (Fig 6). As can been seen from fig. 6, the user 110 may form a search query using one or more of the search terms, the PLANET code used on the mailpiece 602, the recipients zip code 604, the date the mailpiece was processed or sent 606, the recipients name 608, the recipients address 610, the postage amount applied 612 or the serial number of the postage meter that applied postage to the mailpiece 614. It is of course to be appreciated that the search query presented to a user 110 in Fig. 6 may include any combination of searching options shown in Fig. 6. Also, it is to be appreciated that a user need not know the full information contained in any given search parameter to form a search. For example, the user110 only need to input the first five digits of a zip code in the destination zip code search parameter 604 or only need to know some consecutive digits in the PLANET code in the PLANET code search parameter 602 to perform a search.

The track and trace system 10 then access's the lookup table (Fig. 3) for the user 110 and performs a search using the search parameters just entered by the user 110 (Fig. 6) (step 420). If matches are found, the track and trace system preferably presents thumbnail images of mailpieces corresponding the matching mailpieces (Fig. 7) contained in the lookup table (Fig. 3) (step 430). It is of course to be appreciated that if no matches are found, the user 110 is notified of this and is requested to perform a new search. And if more than a predetermined number of matches are found, the user 110 may be requested to performer a narrower search.

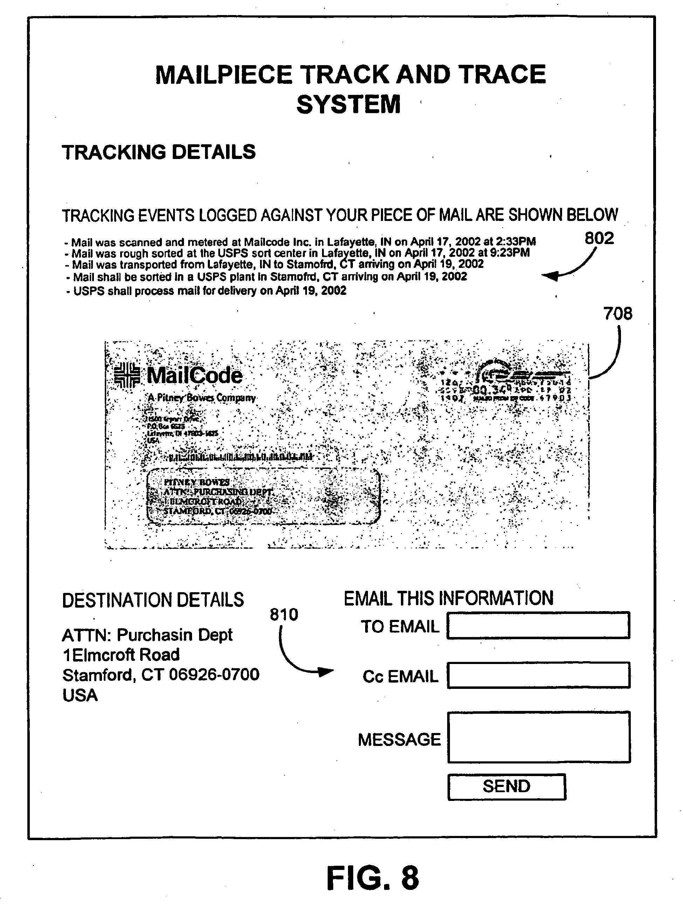

For example, fig. 7 shows a display screen presenting the user with three thumbnail images 702, 704 and 706 corresponding to tracking information corresponding to three mailpieces contained in database 20. The user 110, preferably via a mouse, is able to select each thumbnail image (e.g., thumbnail 702) to enlarge it (enlargement 708) on screen to see all addressing details from the image of the mailpiece as recorded by the track and trace system 10 (step 440). If the user 110 decides to view the tracking details for this mailpiece (e.g., 708), then the user selects it by preferably using a mouse (step 450). As shown in Fig. 8, the tracking details 802 for the selected mailpiece 708 is then displayed (step 460).

As is also shown in Fig. 8, the track and trace system 10 may also preferably be configured to enable the user 110 to forward these tracking details 802, along preferably with an image of the mailpiece 708 to a selected email address via the email client 810 integrated in the track and trace system 10 (step 470). And this process may of course be repeated by the user 110 as desired.

Accordingly, the tracking and tracing system can provides significantly more tracking detail than does the USPS (via PLANET code).

## Claims

1. A system for acquiring and storing mailpiece processing and tracking details in association with mailing details for a mailpiece, wherein said mailing details are received from a postal delivery system, said system comprising:
at least one mailpiece processing system (40, 50, 60, 70) for generating a mailpiece, said processing system configured to generate an electronic file containing processing details for generated mailpieces;
at least one imaging device (70) for acquiring images of the faces of said generated mailpieces;
a database (20) for storing said mailpiece processing details, said acquired images and tracking details for the mailpieces;
an electronic communication system (30) linking said database to a said postal delivery system for input of said tracking details, said at least one mailpiece processing system for input of said processing details and said imaging device for input of said acquired images;
a computer (10) coupled to said database configured to create a searchable electronic catalog whereby the respective mailpiece processing and tracking details and said acquired image for each mailpiece are associated;
wherein:
said computer (10) is linked to a remote user computer (110) configured to enable a user to conduct a search for a mailpiece tracking details in said database (20); and
said computer (10) is configured to present to the user, in response to an electronic search request of the user defining one or more search terms being a mailpiece tracking identifier that is unique to a particular mailer used on the mailpiece, the recipients'zip code, the date the mailpiece was processed or sent, the recipients' name, the recipients' address, the postage amount applied, the serial number of the postage meter that applied postage to the mailpiece or the recepients' phone number, a said acquired image of each mailpiece matching the one or more search terms, and when a mailpiece image is selected by said user, present to the user said mail tracking details stored in association with said selected mailpiece image.

2. A system for acquiring and storing mailpiece processing and tracking details as recited in claim 1 wherein said at least one mailpiece processing system includes a mailpiece sorter (70).

3. A system for acquiring and storing mailpiece processing and tracking details as recited in claim 2 wherein said mailpiece sorter (70) includes said imaging device.

4. A system for acquiring and storing mailpiece processing and tracking details as recited in claim 1 wherein said electronic communication system (30) includes the internet.

5. A system for acquiring and storing mailpiece processing and tracking details as recited in claim 1 wherein said mailpiece processing system includes a mailpiece inserter system (60).

6. A system for acquiring and storing mailpiece processing and tracking details as recited in claim 5 wherein said mailpiece processing details includes portions of a Mail Run Data File as used by said inserter system (60) to generate a said mailpiece.

## Patentansprüche

1. System zum Erfassen und Speichern von Versandstückverarbeitungs- und Verfolgungsdetails in Verknüpfung mit Versanddetails für ein Versandstück,
wobei die Versanddetails von einem Postliefersystem empfangen werden, wobei das System umfasst:
zumindest ein Versandstückverarbeitungssystem (40, 50, 60, 70) zum Erzeugen eines Versandstückes, wobei das Verarbeitungssystem konfiguriert ist, eine elektronische Datei mit Verarbeitungsdetails für die Versandstücke zu erzeugen;
zumindest ein Bildgerät (70) zum Erfassen von Bildern der Oberflächen der erzeugten Versandstücke;
eine Datenbank (20) zum Speichern der Versandstückdetails, der erfassten Bilder und Verfolgungsdetails für die Versandstücke;
ein elektronisches Kommunikationssystem (30), das die Datenbank mit einem Postliefersystem zur Eingabe der Verfolgungsdetails, das zumindest eine Versandstückverarbeitungssystem zur Eingabe der Verarbeitungsdetails und das Bildgerät zur Eingabe der erfassten Bilder verbindet;
einen Computer (10), der mit der Datenbank gekoppelt ist, die konfiguriert ist, einen durchsuchbaren, elektronischen Katalog zu erzeugen, wobei die jeweiligen Versandstückverarbeitungs- und Verfolgungsdetails und das erfasste Bild für jedes Versandstück verknüpft werden;
wobei
der Computer (10) mit einem fern gelegenen Benutzercomputer (110) verbunden ist, der konfiguriert ist, es einem Benutzer zu ermöglichen, eine Suche nach Versandstückverfolgungsdetails in der Datenbank (20) durchzuführen; und
der Computer (10) konfiguriert ist, dem Benutzer in Reaktion auf eine elektronische Suchanfrage des Benutzers, die ein oder mehrere Suchbegriffe definiert, die ein Versandstückverfolgungsidentifikator, der eindeutig für einen bestimmten Versender ist, der auf dem Versandstück verwendet wird, die Postleitzahl des Empfängers, das Datum, an dem das Versandstück verarbeitet oder gesendet wurde, den Namen des Empfängers, die Adresse des Empfängers, den verwendeten Portobetrag, die Seriennummer der Frankiermaschine, die das Porto auf das Versandstück angewendet hat oder die Telefonnummer des Empfängers sind, das erfasste Bild jedes Versandstücks darzustellen, das mit dem einen oder mehreren Suchbegriffen übereinstimmt, und wenn ein Versandstückbild durch den Benutzer ausgewählt wird, dem Benutzer die Versandverfolgungsdetails darzustellen, die in Verbindung mit dem ausgewählten Versandstückbild gespeichert sind.

2. System zum Erfassen und Speichern von Versandstückverarbeitungs- und Verfolgungsdetails nach Anspruch 1, wobei zumindest ein Versandstückverarbeitungssystem einen Versandstücksortierer (70) einschließt.

3. System zum Erfassen und Speichern von Versandstückverarbeitungs- und Verfolgungsdetails nach Anspruch 2, wobei der Versandstücksortierer (70) das Bildgerät einschließt.

4. System zum Erfassen und Speichern von Versandstückverarbeitungs- und Verfolgungsdetails nach Anspruch 1, wobei das elektronische Kommunikationssystem (30) das Internet einschließt.

5. System zum Erfassen und Speichern von Versandstückverarbeitungs- und Verfolgungsdetails nach Anspruch 1, wobei das Versandstückverarbeitungssystem ein Versandstückkuvertiersystem einschließt.

6. System zum Erfassen und Speichern von Versandstückverarbeitungs- und Verfolgungsdetails nach Anspruch 5, wobei die Versandstückverarbeitungsdetails Teile eines Mail-Run-Data-Files (Versandlaufdatendatei) umfassen, wie von dem Kuvertiersystem (60) verwendet, um das Versandstück zu erzeugen.

## Revendications

1. Système de collecte et de stockage de détails de traitement et de suivi d'objets postaux en association avec les détails d'envoi d'un objet postal, dans lequel lesdits détails d'envoi sont reçus d'un système d'acheminement postal, ledit système comprenant :
au moins un système de traitement d'objets postaux (40, 50, 60, 70), destiné à produire un objet postal, ledit système de traitement étant configuré pour produire un fichier électronique contenant des détails de traitement pour les objets postaux produits ;
au moins un dispositif d'imagerie (70), destiné à acquérir des images des faces desdits objets postaux produits ;
une base de données (20), destinée à stocker lesdits détails de traitement des objets postaux, lesdites images acquises et des détails de suivi des objets postaux ;
un système de communication électronique (30) reliant ladite base de données audit système d'acheminement postal pour la saisie desdits détails de suivi, audit au moins un système de traitement d'objets postaux pour la saisie desdits détails de traitement et audit dispositif d'imagerie pour la saisie desdites images acquises ;
un ordinateur (10), couplé à ladite base de données et configuré pour créer un catalogue électronique consultable grâce auquel sont associés les détails respectifs de traitement et de suivi des objets postaux et lesdites images acquises pour chaque objet postal ;
dans lequel :
ledit ordinateur (10) est relié à un ordinateur utilisateur distant (110) configuré pour permettre à un utilisateur de réaliser une recherche de détails de suivi d'un objet postal dans ladite base de données (20) ; et
ledit ordinateur (10) est configuré, en réponse à une demande de recherche électronique de l'utilisateur qui définit un ou plusieurs termes de recherche qui sont un identificateur de suivi d'objet postal, unique pour un expéditeur particulier, qui est utilisé sur l'objet postal, le code postal du destinataire, la date à laquelle l'objet postal a été traité ou envoyé, le nom du destinataire, l'adresse du destinataire, le montant de l'affranchissement apposé, le numéro de série de la machine à affranchir ayant affranchi l'objet postal ou le numéro de téléphone du destinataire, pour présenter à l'utilisateur ladite image acquise de tous les objets postaux correspondant auxdits un ou plusieurs termes de recherche et, lorsqu'une image d'objet postal est sélectionnée par ledit utilisateur, pour présenter à l'utilisateur lesdits détails de suivi de courrier stockés en association avec ladite image d'objet postal sélectionnée.

2. Système de collecte et de stockage de détails de traitement et de suivi d'objets postaux selon la revendication 1, dans lequel ledit au moins un système de traitement d'objets postaux comprend un trieuse pour objets postaux (70).

3. Système de collecte et de stockage de détails de traitement et de suivi d'objets postaux selon la revendication 2, dans lequel ladite trieuse d'objets postaux (70) comprend ledit dispositif d'imagerie.

4. Système de collecte et de stockage de détails de traitement et de suivi d'objets postaux selon la revendication 1, dans lequel ledit système de communication électronique (30) comprend l'internet.

5. Système de collecte et de stockage de détails de traitement et de suivi d'objets postaux selon la revendication 1, dans lequel ledit système de traitement d'objets postaux comprend un système de mise sous pli (60).

6. Système de collecte et de stockage de détails de traitement et de suivi d'objets postaux selon la revendication 5, dans lequel lesdits détails de traitement d'objets postaux comprennent des parties d'un fichier de données de traitement de courrier utilisé par ledit système de mise sous pli (60) pour produire ledit objet postal.
